# EUROPEAN PATENT APPLICATION

(11) **EP 4 615 015 A1**
(43) Date of publication of application: **10.09.2025**
(21) Application number: 22963758.2
(22) Date of filing: 31.10.2022
(51) Int. Cl.: H04W 4/38

(54) **COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/128730
(87) International publication number: WO 2024/092438

(57) **Abstract**

Embodiments of the present disclosure relate to the technical field of communications, and provide a communication method and apparatus, a device, and a storage medium, applicable to sensing measurement initiating devices. The method comprises: determining a first message frame, the first message frame being used for changing sensing measurement parameters of an established sensing measurement; and sending the first message frame. The embodiments of the present disclosure can provide a method for changing sensing measurement parameters of an established sensing measurement.

## Description

### TECHNICAL FIELD

The embodiments of the disclosure relate to the field of communication technologies, in particular to a communication method, a communication apparatus, a device and a storage medium.

### BACKGROUND

With the rapid development of mobile communication technology, Wireless Fidelity (Wi-Fi) technologies have achieved significant progress in terms of transmission rate and throughput. Among the currently researched Wi-Fi technologies, the wireless local area network (WLAN) sensing technology may be supported in various application scenarios such as location discovery, proximity detection and presence detection in dense environments (e.g., home or working environments).

Sensing measurement may include trigger-based (TB) measurement, non-TB measurement and sensing by proxy (SBP) measurement, in which the TB measurement includes responder to responder (R2R) measurement. In a case where any type of sensing measurement has been established, if there is a need to change a sensing measurement parameter negotiated between a sensing initiator and a sensing responder during the sensing measurement setup process, the sensing initiator needs to terminate the established sensing measurement by using a termination frame and then re-initiate a new sensing measurement setup process to negotiate a new sensing measurement parameter, which thus causes a large signaling overhead.

### SUMMARY

Embodiments of the disclosure provide a communication method, a communication apparatus, a device and a storage medium, and may provide a method for changing a sensing measurement parameter of an established sensing measurement.

According to a first aspect of embodiments of the disclosure, a communication method is provided. The communication method is performed by a sensing initiator, and includes:
determining a first message frame, in which the first message frame is configured to change a sensing measurement parameter of an established sensing measurement; and
sending the first message frame.

According to a second aspect of embodiments of the disclosure, a communication method is provided. The communication method is performed by a sensing responder, and includes:
receiving a first message frame, in which the first message frame is configured to change a sensing measurement parameter of an established sensing measurement; and
changing the sensing measurement parameter of the established sensing measurement according to the first message frame.

According to a third aspect of embodiments of the disclosure, a communication apparatus is provided. The apparatus includes:
a determining module, configured to determine a first message frame, in which the first message frame is configured to change a sensing measurement parameter of an established sensing measurement; and
a first transceiver module, configured to send the first message frame.

According to a fourth aspect of embodiments of the disclosure, a communication apparatus is provided. The apparatus includes:
a second transceiver module, configured to receive a first message frame, in which the first message frame is configured to change a sensing measurement parameter of an established sensing measurement; and
a processing module, configured to change the sensing measurement parameter of the established sensing measurement according to the first message frame.

According to a fifth aspect of embodiments of the disclosure, a sensing initiator is provided. The sensing initiator includes: a memory, a processor and a computer program stored in the memory and executable by the processor. The processor performs the communication method of the first aspect of embodiments of the disclosure when executing the program.

According to a sixth aspect of embodiments of the disclosure, a sensing responder is provided. The sensing responder includes: a memory, a processor and a computer program stored in the memory and executable by the processor. The processor performs the communication method of the second aspect of embodiments of the disclosure when executing the program.

According to a seventh aspect of embodiments of the disclosure, a computer-readable storage medium is provided. The computer-readable storage medium stores a computer program, and when the computer program is executed by a processor, any one of the above communication methods of the embodiments of the disclosure is implemented.

In the embodiment of the disclosure, when the sensing initiator needs to change the sensing measurement parameter of the established sensing measurement, the sensing initiator sends the first message frame to the sensing responder, enabling the sensing responder to change the sensing measurement parameter of the established sensing measurement according to the received first message frame, thereby saving signaling overhead.

Additional aspects and advantages of embodiments of disclosure will be given in part in the following descriptions, will become apparent in part from the following descriptions, or can be learned from the practice of the disclosure.

### BRIEF DESCRIPTION OF THE DRAWINGS

In order to clearly illustrate technical solutions of the embodiments of the disclosure, a brief description of drawings used in the embodiments of the disclosure is given below. Obviously, the drawings in the following descriptions are only part of the embodiments of the disclosure, and for those skilled in the art, other drawings may be obtained according to these drawings without inventive works.
FIG. 1 is a schematic architecture diagram of wireless local area network (WLAN) sensing measurement according to an embodiment of the disclosure.
FIG. 2 is a schematic diagram of a communication link according to an embodiment of the disclosure.
FIG. 3 is a schematic architecture diagram of WLAN sensing measurement according to another embodiment of the disclosure.
FIG. 4 is a flowchart of a communication method according to an embodiment of the disclosure.
FIG. 5 is a flowchart of a communication method according to another embodiment of the disclosure.
FIG. 6 is a schematic diagram of a communication apparatus according to an embodiment of the disclosure.
FIG. 7 is a schematic diagram of a communication apparatus according to another embodiment of the disclosure.
FIG. 8 is a schematic diagram of an electronic device according to an embodiment of the disclosure.

### DETAILED DESCRIPTION

In embodiments of the disclosure, the term "and/or" describes an association relation between associated objects, which indicates three relations, for example, "A and/or B" may represent: A existing alone, both A and B existing, or B existing alone. The character "/" generally represents that the associated objects prior to and after the character "/" is in an "or" relation.

The term "a plurality of" in embodiments of the disclosure refers to two or more, which is the similar for other quantifiers.

Exemplary embodiments will be described in detail herein, examples of which are illustrated in drawings. Unless otherwise represented in the following description, the same numbers in different drawings refer to the same or similar elements. The implementations described in the following exemplary embodiments do not represent all implementations consistent with the disclosure. Instead, they are merely examples of apparatuses and methods consistent with aspects related to the disclosure as detailed in the appended claims.

The terms used in the disclosure are only for the purpose of describing specific embodiments, and are not intended to limit the disclosure. The singular forms of "a", "the" and "this" used in the disclosure and the appended claims are also intended to include plural forms, unless the context clearly indicates other meanings. It is understood that the term "and/or" as used herein refers to and includes any or all possible combinations of one or more associated listed items.

It is understandable that although the terms "first", "second", and "third" may be used in the disclosure to describe various information, such information should not be limited by these terms. These terms are only used to distinguish information of the same type from each other. For example, without departing from the scope of the disclosure, first information may also be referred to as second information, and similarly, second information may also be referred to as first information. Depending on the context, the word "if" as used herein may be interpreted as "when", "while" or "in response to determining".

The technical solutions in embodiments of the disclosure will be described clearly and completely below in combination with the drawings in the embodiments of the disclosure. It is apparent that the described embodiments are merely same rather than all of the embodiments of the disclosure. Based on the embodiments of the disclosure, other embodiments obtained by those skilled in the art without inventive works all fall within the scope of protection of the disclosure.

The method and the apparatus are based on the same disclosure concept. Since the method and apparatus solve problems based on similar principles, the implementations of the apparatus and the method can refer to each other, and the repeated contents will not be elaborated again.

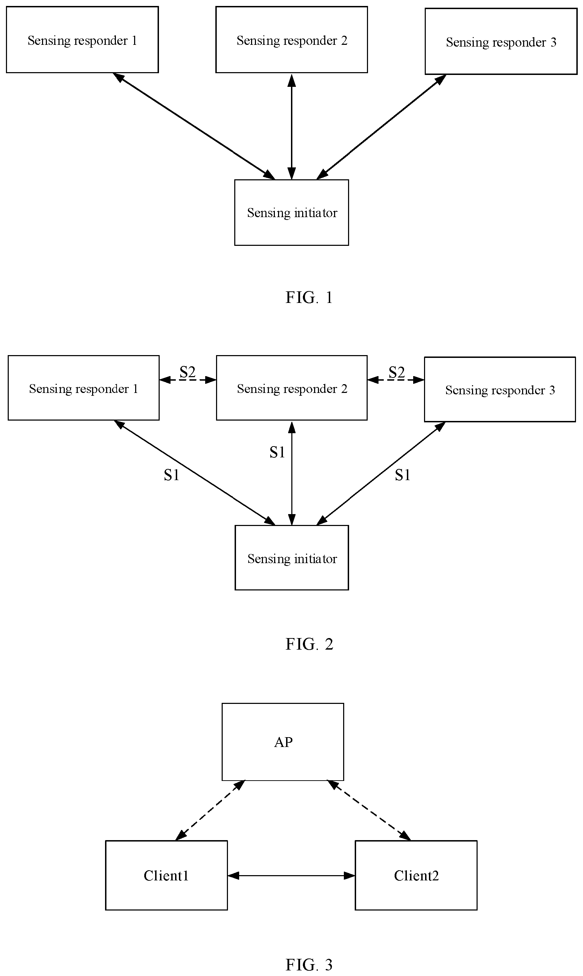

As a first example, as illustrated in FIGs. 1-3, architectures and processes of wireless local area network (WLAN) sensing measurements to which a communication method provided by the embodiments of the disclosure is applied will be first introduced.

FIG. 1 illustrates a schematic architecture diagram of WLAN sensing measurement. In FIG. 1, a sensing measurement initiator (referred to as sensing initiator) initiates a WLAN sensing measurement (e.g., initiates a WLAN sensing measurement session), and there may be a plurality of sensing measurement responders (referred to as sensing responder), such as sensing responder 1, sensing responder 2 and sensing responder 3 shown in FIG. 2, respond to it. When the sensing initiator initiates the WLAN sensing measurement, a plurality of associated or unassociated sensing responders for the WLAN sensing measurement may respond.

Here, the term "associated" means that an initial association connection (referred to as initial link setup) for communications is established between the sensing initiator and the sensing responder, and the term "unassociated" means that the initial link setup for communications is not established between the sensing initiator and the sensing responder.

As illustrated in FIG. 2, the sensing initiator communicates with the sensing responder through a communication link, as shown by a communication link S1. The sensing responders communicate with each other through a communication link S2.

Each sensing initiator may be a client, and each sensing responder (i.e., the sensing responders 1 to 3 in this example) may be a station (STA) or an access point (AP).

The AP is a wireless switch configured for a wireless network and also an access device of the wireless network. The AP may include a software application and/or a circuit, to enable other types of nodes in the wireless network to communicate with the outside and inside of the wireless network through the AP. As an example, the AP may be a terminal or a network device equipped with a Wireless Fidelity (Wi-Fi) chip.

As another architecture, as shown in FIG. 3, the sensing initiator and the sensing responder may both be clients, and may communicate by connecting to the same AP. In FIG. 3, Client1 is a sensing initiator, and Client2 is a sensing responder.

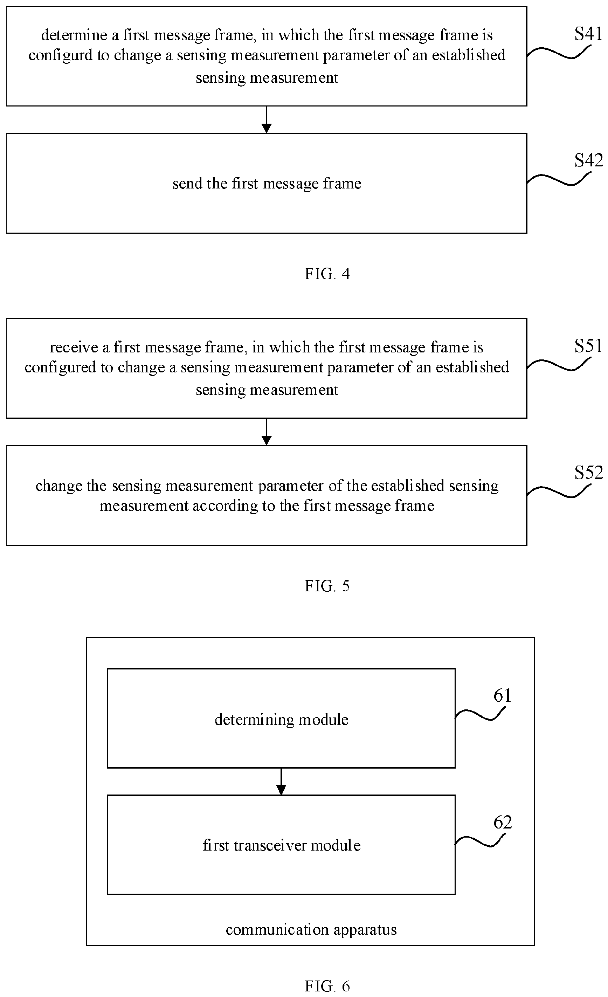

The embodiment of the disclosure provides a communication method, which may be specifically referred to FIG. 4. FIG. 4 is a flowchart of a communication method according to an embodiment of the disclosure. Optionally, the method may be performed by a sensing initiator, and includes the following steps.

At step S41, a first message frame is determined, in which the first message frame is configured to change a sensing measurement parameter of an established sensing measurement.

The established sensing measurement may be any one of trigger-based (TB) measurement, non-TB measurement and sensing by proxy (SBP) measurement, and may also be responder to responder (R2R) measurement in the TB measurement.

For the SBP measurement, in a WLAN sensing measurement process, in order to realize one-to-many communication between the STA, acting as the sensing initiator, and sensing responders, the STA, acting as an SBP initiator, initiates an SBP process. The AP acts as a sensing responder to act on behalf of the STA for the WLAN sensing measurement.

For the R2R measurement, the whole sensing measurement process is triggered by the AP acting as the sensing initiator. One STA acts as a sensing transmitter of a null data packet (NDP) frame, and other STAs act as sensing receivers of the NDP frame and perform the sensing measurement after receiving the NDP frame. When one STA acts as the sensing transmitter of the NDP frame, the AP may also receive the NDP frame and perform the sensing measurement.

As an example, when the sensing initiator needs to change the sensing measurement parameter of the established sensing measurement, the first message frame is first determined to change the sensing measurement parameter of the established sensing measurement.

At step S42, the first message frame is sent.

As an example, when the sensing initiator needs to change the sensing measurement parameter of the established sensing measurement, the sensing initiator sends the first message frame to the sensing responder to perform the change of the sensing measurement parameter, so that it is unnecessary to terminate the established sensing measurement and initiate a new sensing measurement setup process to realize the change of the sensing measurement parameter.

In the communication method, performed by the sensing initiator, provided by the disclosure, the first message frame is a measurement setup (MS) request frame or an SBP request frame.

As an example, in a case where the sensing measurement established by the sensing initiator is the TB measurement or the non-TB measurement, when it is necessary to change the sensing measurement parameter of the established sensing measurement, the sensing initiator may send the MS request frame to change the sensing measurement parameter of the established sensing measurement.

As an example, in a case where the sensing measurement established by the sensing initiator is the SBP measurement, when it is necessary to change the sensing measurement parameter of the established sensing measurement, the sensing initiator may send the SBP request frame to change the sensing measurement parameter of the established sensing measurement.

In the communication method performed by the sensing initiator provided by the disclosure, the first message frame includes a first identification (ID) information, and the first ID information is configured for indicating to change the sensing measurement parameter of the established sensing measurement.

The first ID information may be any ID information in the first message frame, which may be a reserved information in any information field in the first message frame, or an ID information associated with the established sensing measurement in the first message frame.

The first ID information may indicate, through a preset value, that the first message frame is configured to change the sensing measurement parameter of the established sensing measurement. For example, when the ID value of the first ID information is 1, the first ID information is configured to indicate that the first message frame is configured to change the sensing measurement parameter of the established sensing measurement.

That is, the first message frame may explicitly indicate, through the first ID information, to change the sensing measurement parameter of the established sensing measurement.

In the communication method performed by the sensing initiator provided by the disclosure, the first message frame includes a measurement setup ID (MSID) of the established sensing measurement, and the first message frame is configured to indicate to change the sensing measurement parameter of the sensing measurement corresponding to the MSID included in the first message frame.

When the first message frame includes the MSID of the established sensing measurement, the first message frame may implicitly indicate, through the included MSID, to change the sensing measurement parameter of the sensing measurement corresponding to the MSID.

As an example, the first message frame includes the first ID information for indicating to change the sensing measurement parameter of the established sensing measurement. The first message frame also includes the MSID of the established sensing measurement, thus the first message frame is configured to indicate to change the sensing measurement parameter of the established sensing measurement corresponding to the MSID.

In the communication method performed by the sensing initiator provided by the disclosure, the first message frame includes at least one piece of second ID information, and each second ID information indicates, through a first value, to change one type of sensing measurement parameter.

The sensing measurement parameter includes a bandwidth (BW) parameter, an spatial stream (SS) parameter and other related parameters.

When the established sensing measurement is the SBP measurement, i.e., the first message frame is the SBP request frame, the sensing measurement parameter also includes a number of STAs participating in the sensing measurement.

The first message frame may include the second ID information corresponding to the sensing measurement parameter to be changed, in which each second ID information indicates, through the first value, to change the corresponding sensing measurement parameter.

As an example, when the sensing initiator only needs to change the BW parameter of the established sensing measurement, the first message frame may only include the second ID information (e.g., a BW present bit) corresponding to the BW parameter, and indicate, through the first value, that the BW parameter of the established sensing measurement needs to be changed. When the first message frame does not include any second ID information corresponding to other sensing measurement parameters, it means that the second ID information corresponding to other sensing measurement parameters do not need to be changed.

Optionally, the first message frame may include second ID information corresponding to all sensing measurement parameters. Each second ID information may indicate, through the first value, that the sensing measurement parameter corresponding to the second ID information needs to be changed, or may indicate, through other values, that the sensing measurement parameter corresponding to this second ID information does not need to be changed.

The first value may be 1, which is not limited here.

As an example, the sensing initiator needs to change the BW parameter and the SS parameter of the established sensing measurement, and the first message frame includes the second ID information corresponding to various sensing measurement parameters. ID values of the second ID information corresponding to the BW parameter and the SS parameter are both 1, which indicates that the BW parameter and the SS parameter of the established sensing measurement need to be changed. ID values of the second ID information corresponding to other sensing measurement parameters are 0, which indicates that the corresponding sensing measurement parameters do not need to be changed.

In the communication method performed by the sensing initiator provided by the disclosure, the first message frame includes a sensing measurement parameter information element, and the sensing measurement information element includes a changed sensing measurement parameter.

The sensing measurement parameter information element includes a plurality of information bits, and each information bit corresponds to one type of sensing measurement parameter. When one type of sensing measurement parameter of the established sensing measurement needs to be changed, the information bit corresponding to this type of sensing measurement parameter in the sensing measurement parameter information element may include a changed sensing measurement parameter corresponding to this type of sensing measurement parameter. When any information bit is 0, it indicates that the corresponding sensing measurement parameter does not need to be changed.

As an example, when the established sensing measurement is the SBP measurement, and the sensing initiator needs to change the BW parameter of the established sensing measurement and the number of STAs participating in the SBP measurement, the first message frame includes the sensing measurement parameter information element, and the information bit corresponding to the BW parameter in the sensing measurement parameter information element includes a changed BW parameter. That is, the sensing responder is caused to change the original BW parameter to the BW parameter included in the sensing measurement information element. The information bit corresponding to the number of STAs participating in the SBP measurement in the sensing measurement parameter information element also includes a changed number of STAs, so that the sensing responder is caused to change the number of STAs participating in the SBP measurement to the number of STAs included in this information bit.

In the communication method performed by the sensing initiator provided by the disclosure, the first message frame includes at least one piece of third ID information, and each third ID information corresponds to one communication link.

Each third ID information indicates, through a third value, the sensing responder to switch to the corresponding communication link to perform the established sensing measurement.

That is, for each third ID information, when an ID value of the third ID information is the second value, the third ID information is configured to indicate the sensing responder to switch the established sensing measurement to be performed under the communication link corresponding to the third ID information. When the ID value of the third ID information is a third value, the third ID information is configured to indicate that the sensing responder does not need to switch the established sensing measurement to be performed under the communication link corresponding to the third ID information.

The second value is different from the third value, which is not limited here. For example, the second value may be 1, and the third value may be 0.

In the communication method performed by the sensing initiator provided by the disclosure, the first message frame includes a link bitmap information field, and the link bitmap information field includes the at least one piece of third ID information.

As an example, the first message frame includes the link bitmap information field. The link bitmap information field includes the at least one piece of third ID information, and each ID information corresponds to one communication link. Each third ID information indicates, through the second value, the sensing responder to switch the established sensing measurement to be performed under the communication link corresponding to the third ID information, and indicates, through the third value, that it is unnecessary to switch the established sensing measurement to be performed under the communication link corresponding to the third ID information.

In the communication method performed by the sensing initiator provided by the disclosure, the first message frame further includes a fourth ID information, which is configured to indicate a change time for the sensing measurement parameter of the established sensing measurement, i.e., to indicate when the sensing responder changes the sensing measurement parameter of the established sensing measurement.

The change time for the sensing measurement parameter of the established sensing measurement indicated by the fourth ID information may indicate an immediate change after receiving the first message frame, or a change performed after a preset time interval following the receipt of the first message frame, which is not limited herein.

Optionally, the change time for the sensing measurement parameter of the established sensing measurement indicated by the fourth ID information may also indicate a change performed after performing, based on the sensing measurement parameter before the change, the sensing measurement for a preset number of times, in which the preset number of times is not limited here.

As an example, the first message frame includes a fourth ID information, which is configured to indicate the sensing responder to change the sensing measurement parameter of the established sensing measurement immediately after receiving the first message frame.

As an example, the first message frame includes a fourth ID information, which is configured to indicate the sensing responder to change the original sensing measurement parameter of the established sensing measurement after performing, according to the original sensing measurement parameter, the sensing measurement for the preset number of times.

In the communication method performed by the sensing initiator provided by the disclosure, after sending the first message frame, the method further includes: receiving a second message frame.

The second message frame includes a fifth ID information, and the fifth ID information is configured to indicate that the sensing responder confirms to change the sensing measurement parameter of the established sensing measurement.

As an example, the fifth ID information may indicate, through a fourth value, that the sensing responder confirms to change the sensing measurement parameter of the established sensing measurement, that is, indicate that the sensing responder agrees to change the sensing measurement parameter of the established sensing measurement.

In the communication method performed by the sensing initiator provided by the disclosure, the fifth ID information is a status code field, and the fifth ID information indicates, through first indication information, that the sensing responder confirms to change the sensing measurement parameter of the established sensing measurement.

The first indication information may be success, which is not limited here.

As an example, the sensing initiator may receive the second message frame after sending the first message frame. The second message frame includes the status code field, and indicates, when the status code field is success, that the sensing responder confirms to change the sensing measurement parameter of the established sensing measurement.

In the communication method performed by the sensing initiator provided by the disclosure, when the first message frame is an MS request frame, the second message frame is an MS response frame. When the first message frame is the SBP request frame, the second message frame is an SBP response frame.

Optionally, the second message frame may be any message frame sent by the sensing responder to the sensing initiator, which is not limited here.

In the communication method performed by the sensing initiator provided by the disclosure, when the first message frame is the MS request frame, the second message frame is the MS response frame, which includes an MSID of the established sensing measurement. The second message frame is configured to indicate that the sensing responder confirms to change the sensing measurement parameter of the established sensing measurement corresponding to the MSID.

An embodiment of the disclosure provides a communication method as shown in FIG. 5. FIG. 5 is a flowchart of a communication method provided by another embodiment of the disclosure. Optionally, the method may be performed by to a sensing responder. The method includes the following steps.

At step S51, a first message frame is received, in which the first message frame is configured to change a sensing measurement parameter of an established sensing measurement.

The established sensing measurement may be any one of TB measurement, non-TB measurement and SBP measurement, and it may also be R2R measurement in the TB measurement.

For the SBP measurement, in a WLAN sensing measurement process, in order to realize one-to-many communication between the STA, acting as a sensing initiator, and sensing responders, the STA, acting as an SBP initiator, initiates an SBP process. The AP acts as the sensing responder to act on behalf of the STA for WLAN sensing measurement.

For the R2R measurement, the whole sensing measurement process is triggered by the AP acting as the sensing initiator. One STA acts as a sensing transmitter of a NDP frame, and other STAs act as sensing receivers of the NDP frame and perform sensing measurement after receiving the NDP frame. When one STA acts as the sensing transmitter of the NDP frame, the AP may also receive the NDP frame and perform the sensing measurement.

At step S52, the sensing measurement parameter of the established sensing measurement is changed according to the first message frame.

After receiving the first message frame, the sensing responder changes the sensing measurement parameter of the established sensing measurement according to the first message frame.

In the communication method performed by the sensing responder provided by the disclosure, the first message frame is an MS request frame or an SBP frame.

As an example, in a case where the sensing measurement established by the sensing initiator is the TB measurement or the non-TB measurement, the received first message frame is the MS request frame, which is configured to change the sensing measurement parameter of the established sensing measurement.

As an example, in a case where the sensing measurement established by the sensing initiator is the SBP measurement, the received first message frame is the SBP request frame, which is configured to change the sensing measurement parameter of the established sensing measurement.

In the communication method performed by the sensing responder provided by the disclosure, the first message frame includes a first ID information, and the first ID information is configured for indicating to change the sensing measurement parameter of an established sensing measurement.

The first ID information may be any ID information in the first message frame, which may be a reserved information in any information field in the first message frame, or an ID information associated with the established sensing measurement in the first message frame.

The first ID information may indicate, through a preset value, that the first message frame is configured to change the sensing measurement parameter of the established sensing measurement. For example, when the ID value of the first ID information is 1, the first ID information is configured to indicate that the first message frame is configured to change the sensing measurement parameter of the established sensing measurement.

That is, the first message frame may explicitly indicate, through the first ID information, to change the sensing measurement parameter of the established sensing measurement.

After receiving the first message frame, the sensing responder may determine, according to the first ID information, that the sensing measurement parameter of the established sensing measurement needs to be changed.

In the communication method performed by the sensing responder provided by the disclosure, the first message frame includes an MSID of the established sensing measurement, and the first message frame is configured to change the sensing measurement parameter of the sensing measurement corresponding to the MSID included in the first message frame.

When the first message frame includes the MSID of the established sensing measurement, the first message frame may implicitly indicate, through the included MSID, to change the sensing measurement parameter of the sensing measurement corresponding to the MSID.

As an example, the first message frame includes a first ID information for indicating to change the sensing measurement parameter of the established sensing measurement. The first message frame also includes the MSID of the established sensing measurement, thus the first message frame is configured to indicate to change the sensing measurement parameter of the established sensing measurement corresponding to the MSID.

After the sensing responder receives the first message frame, in a case where the first message frame includes the MSID of the established sensing measurement, it may determine that the sensing measurement parameter of the sensing measurement corresponding to the MSID needs to be changed.

In the communication method performed by the sensing responder provided by the disclosure, the first message frame includes at least one piece of second ID information, and each second ID information indicates, through a first value, to change one type of sensing measurement parameter.

The sensing measurement parameter includes a BW parameter, an SS parameter and other related parameters.

When the established sensing measurement is the SBP measurement, i.e., the first message frame is the SBP request frame, the sensing measurement parameter also includes a number of STAs participating in the sensing measurement.

The first message frame may include the second ID information corresponding to the sensing measurement parameter to be changed, in which each second ID information indicates, through the first value, to change the corresponding sensing measurement parameter.

As an example, when the sensing initiator only needs to change the BW parameter of the established sensing measurement, the first message frame may only include the second ID information (e.g., a BW present bit) corresponding to the BW parameter, and indicate, through the first value, that the BW of the established sensing measurement needs to be changed. When the first message frame does not include any second ID information corresponding to other sensing measurement parameters, it means that the second ID information corresponding to other sensing measurement parameters do not need to be changed.

At this time, after receiving the first message frame, the sensing responder may determine that the sensing measurement parameters, corresponding to the second ID information, of the established sensing measurement needs to be changed.

Optionally, the first message frame may include second ID information corresponding to all sensing measurement parameters. Each second ID information may indicate, through the first value, that the sensing measurement parameter corresponding to the second ID information needs to be changed, or may indicate, through other values, that the sensing measurement parameter corresponding to this second ID information does not need to be changed.

The first value may be 1, which is not limited here.

As an example, the sensing initiator needs to change the BW parameter and the SS parameter of the established sensing measurement, and the first message frame includes the second ID information corresponding to various sensing measurement parameters. ID values of the second ID information corresponding to the BW parameter and the SS parameter are both 1, which indicates that the BW parameter and the SS parameter of the established sensing measurement need to be changed. ID values of the second ID information corresponding to other sensing measurement parameters are 0, which indicates that the corresponding sensing measurement parameters do not need to be changed.

At this time, after receiving the first message frame, the sensing responder may determine that the BW parameter and the SS parameter of the established sensing measurement need to be changed.

In the communication method performed by the sensing responder provided by the disclosure, the first message frame includes a sensing measurement parameter information element, and the sensing measurement information element includes a changed sensing measurement parameter.

The sensing measurement parameter information element includes a plurality of information bits, and each information bit corresponds to one type of sensing measurement parameter. When one type of sensing measurement parameter of the established sensing measurement needs to be changed, the information bit corresponding to this type of sensing measurement parameter in the sensing measurement parameter information element may include a changed sensing measurement parameter corresponding to this type of sensing measurement parameter. When any information bit is 0, it indicates that the corresponding sensing measurement parameter does not need to be changed.

As an example, when the established sensing measurement is the SBP measurement, and the sensing initiator needs to change the BW parameter of the established sensing measurement and the number of STAs participating in the SBP measurement, the first message frame includes the sensing measurement parameter information element, and the information bit corresponding to the BW parameter in the sensing measurement parameter information element includes a changed BW parameter. The information bit corresponding to the number of STAs participating in the SBP measurement in the sensing measurement parameter information element also includes a changed number of STAs.

At this time, after receiving the first message frame, the sensing responder may determine to change the original BW parameter of the established SBP measurement to the changed BW parameter included in the sensing measurement information element, and change the number of STAs participating in the SBP measurement to the number of STAs included in the information bit.

In the communication method performed by the sensing responder provided by the disclosure, the first message frame includes at least one piece of third ID information, and each third ID information corresponds to one communication link.

Each third ID information indicates, through a third value, the sensing responder to switch to the corresponding communication link to perform the established sensing measurement through a third value.

That is, for each third ID information, when an ID value of the third ID information is the second value, the sensing responder may switch the established sensing measurement to be performed under the communication link corresponding to the third ID information. When the ID value of the third ID information is a third value, the sensing responder does not need to switch the established sensing measurement to be performed under the communication link corresponding to the third ID information.

The second value is different from the third value, which is not limited here. For example, the second value may be 1, and the third value may be 0.

In the communication method performed by the sensing responder provided by the disclosure, the first message frame includes a link bitmap information field, and the link bitmap information field includes the at least one piece of third ID information.

As an example, the first message frame includes the link bitmap information field. The link bitmap information field includes the at least one piece of third ID information, and each ID information corresponds to one communication link. Each third ID information indicates, through the second value, the sensing responder to switch the established sensing measurement to be performed under the communication link corresponding to the third ID information, and indicates, through the third value, that it is unnecessary to switch the established sensing measurement to be performed under the communication link corresponding to the third ID information.

In the communication method performed by the sensing responder provided by the disclosure, the first message frame further includes a fourth ID information, which is configured to indicate a change time for the sensing measurement parameter of the established sensing measurement, i.e., to indicate when the sensing responder changes the sensing measurement parameter of the established sensing measurement .

The change time for the sensing measurement parameter of the established sensing measurement indicated by the fourth ID information may indicate an immediate change after receiving the first message frame, or a change performed after a preset time interval following the receipt of the first message frame, which is not limited herein.

Optionally, the change time for the sensing measurement parameter of the established sensing measurement indicated by the fourth ID information may also indicate a change performed after performing, based on the sensing measurement parameter before the change, the sensing measurement for a preset number of times, in which the preset number of times is not limited here.

As an example, the first message frame includes a fourth ID information, which is configured to indicate the sensing responder to change the sensing measurement parameter of the established sensing measurement immediately after receiving the first message frame.

As an example, the first message frame includes a fourth ID information, and the fourth ID information is configured to indicate the sensing responder to change the original sensing measurement parameter of the established sensing measurement after performing, according to the original sensing measurement parameter, the sensing measurement for the preset number of times. The sensing responder performs the sensing measurement based on the original sensing measurement parameter after receiving the first message frame, and changes the original sensing measurement parameter of the established sensing measurement after performing the sensing measurement for the preset number of times.

In the communication method performed by the sensing responder provided by the disclosure, after receiving the first message frame, the method further includes: sending a second message frame.

The second message frame includes a fifth ID information, and the fifth ID information is configured to indicate that the sensing responder confirms to change the sensing measurement parameter of the established sensing measurement.

As an example, the fifth ID information may indicate, through a fourth value, that the sensing responder confirms to change the sensing measurement parameter of the established sensing measurement, that is, indicate that the sensing responder agrees to change the sensing measurement parameter of the established sensing measurement.

In the communication method performed by the sensing responder provided by the disclosure, the fifth ID information is a status code field, and the fifth ID information indicates, through first indication information, that the sensing responder confirms to change the sensing measurement parameter of the established sensing measurement.

The first indication information may be success, which is not limited here.

As an example, after receiving the first message frame, the sensing responder may sends the second message frame when the sensing responder agrees to change the sensing measurement parameter of the established sensing measurement. The second message frame includes the status code field, and indicates, when the status code field is success, that the sensing responder confirms to change the sensing measurement parameter of the established sensing measurement.

In the communication method performed by the sensing responder provided by the disclosure, when the first message frame is an MS request frame, the second message frame is an MS response frame. When the first message frame is the SBP request frame, the second message frame is an SBP response frame.

Optionally, the second message frame may be any message frame sent by the sensing responder to the sensing initiator, which is not limited here.

In the communication method performed by the sensing responder provided by the disclosure, when the first message frame is the MS request frame, the second message frame may be the MS response frame, which includes an MSID of the established sensing measurement. The second message frame is configured to indicate that the sensing responder confirms to change the sensing measurement parameter of the established sensing measurement corresponding to the MSID.

In the communication method provided by the disclosure, when the sensing initiator needs to change the sensing measurement parameter of the established sensing measurement, the sensing initiator may send the first message frame to the sensing responder, enabling the sensing responder to change the sensing measurement parameter of the established sensing measurement according to the received first message frame, thereby saving signaling overhead.

As illustrated in FIG. 6, the embodiment of the disclosure provides a communication apparatus. The communication apparatus includes:
a determining module 61, configured to determine a first message frame, in which the first message frame is configured to change a sensing measurement parameter of an established sensing measurement; and
a first transceiver module 62, configured to send the first message frame.

Optionally, in the embodiment of the disclosure, the first message frame is a MS request frame or an SBP request frame.

Optionally, in the embodiment of the disclosure, the first message frame includes a first ID information for indicating to change the sensing measurement parameter of the established sensing measurement.

Optionally, in the embodiment of the disclosure, the first message frame includes an MSID of the established sensing measurement.

Optionally, in the embodiment of the disclosure, the first message frame includes at least one piece of second ID information, and each second ID information indicates, through a first value, to change one type of sensing measurement parameter.

Optionally, in the embodiment of the disclosure, the first message frame includes a sensing measurement parameter information element, and the sensing measurement parameter information element includes a changed sensing measurement parameter.

Optionally, in the embodiment of the disclosure, the first message frame further includes at least one piece of third ID information, and each third ID information corresponds to one communication link and indicates, through a second value, to switch to the corresponding communication link to perform the established sensing measurement.

Optionally, in the embodiment of the disclosure, the first message frame includes a link bitmap information field, and the link bitmap information field includes the at least one piece of third ID information.

Optionally, in the embodiment of the disclosure, the first message frame further includes a fourth ID information, and the fourth ID information is configured to indicate a change time for the sensing measurement parameter of the established sensing measurement.

Optionally, in the embodiment of the disclosure, the first transceiver module 62 is further configured to:

receive a second message frame, in which the second message frame includes a fifth ID information for indicating that a sensing responder confirms to change the sensing measurement parameter of the established sensing measurement.

Optionally, in the embodiment of the disclosure, the fifth ID information is a status code field, and the status code field indicates, through first indication information, that the sensing responder confirms to change the sensing measurement parameter of the established sensing measurement.

Optionally, in the embodiment of the disclosure, in a case that the first message frame is a measurement setup request frame, the second message frame is an MS response frame, and in a case that the first message frame is the SBP request frame, the second message frame is an SBP response frame.

Optionally, in the embodiment of the disclosure, in a case that the second message frame is the MS response frame, the second message frame comprises an MSID of the established sensing measurement.

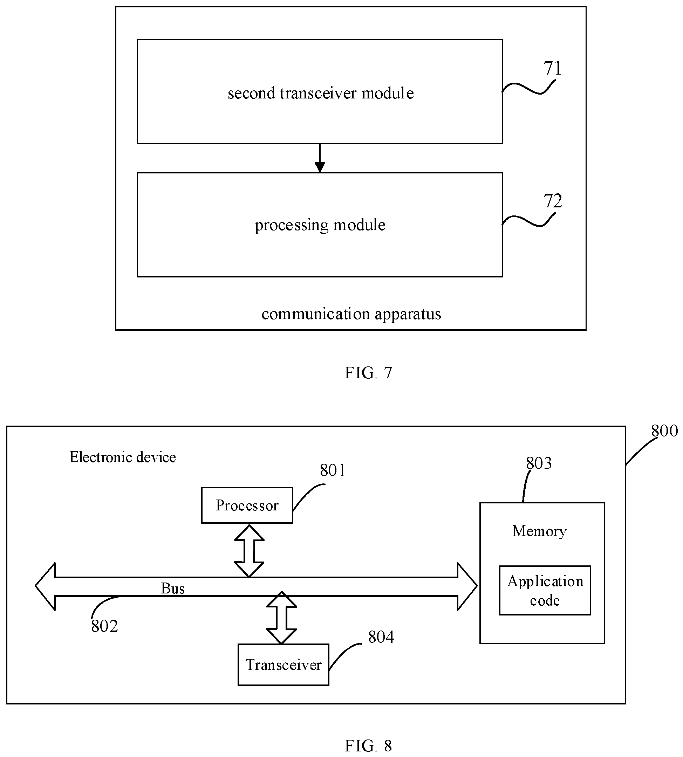

As illustrated in FIG. 7, the embodiment of the disclosure provides a communication apparatus. The communication apparatus includes:
a second transceiver module 71, configured to receive a first message frame, in which the first message frame is configured to change a sensing measurement parameter of an established sensing measurement; and
a processing module 72, configured to change the sensing measurement parameter of the established sensing measurement according to the first message frame.

Optionally, in the embodiment of the disclosure, the first message frame is an MS request frame or an SBP request frame.

Optionally, in the embodiment of the disclosure, the first message frame includes a first ID information for indicating to change the sensing measurement parameter of the established sensing measurement.

Optionally, in the embodiment of the disclosure, the first message frame includes an MSID of the established sensing measurement.

Optionally, in the embodiment of the disclosure, the first message frame includes at least one piece of second ID information, and each second ID information indicates, through a first value, to change one type of sensing measurement parameter.

Optionally, in the embodiment of the disclosure, the first message frame includes a sensing measurement parameter information element, and the sensing measurement parameter information element includes a changed sensing measurement parameter.

Optionally, in the embodiment of the disclosure, the first message frame further includes at least one piece of third ID information, each third ID information corresponds to one communication link and indicates, through a second value, to switch to the corresponding communication link to perform the established sensing measurement.

Optionally, in the embodiment of the disclosure, the first message frame includes a link bitmap information field, and the link bitmap information field includes the at least one piece of third ID information.

Optionally, in the embodiment of the disclosure, the first message frame further includes a fourth ID information, and the fourth ID information is configured to indicate a change time for the sensing measurement parameter of the established sensing measurement.

Optionally, in the embodiment of the disclosure, the second transceiver module 71 is further configured to:
send a second message frame, in which the second message frame includes a fifth ID information for indicating the sensing responder confirms to change the sensing measurement parameter of the established sensing measurement.

Optionally, in the embodiment of the disclosure, the fifth ID information is a status code field, and the status code field indicates, through first indication information, that the sensing responder confirms to change the sensing measurement parameter of the established sensing measurement.

Optionally, in the embodiment of the disclosure, in a case that the first message frame is the MS request frame, the second message frame is an MS response frame, and in a case that the first message frame is the SBP request frame, the second message frame is an SBP response frame.

Optionally, in the embodiment of the disclosure, in a case that the second message frame is the MS response frame, the second message frame includes an MSID of the established sensing measurement.

The embodiment of the disclosure also provides an electronic device. As illustrated in FIG. 8, the electronic device 8000 shown in FIG. 8 includes: a processor 801 and a memory 803. The processor 801 is connected to the memory 803, for example, via a bus 802. Optionally, the electronic device 800 may also include a transceiver 804. It should be noted that there may be one or more transceivers 804 in practical applications, and the structure of the electronic device 800 does not constitute a limitation of the embodiment of the disclosure.

The memory 803 is configured to store an application code for executing the embodiments of the disclosure, and the execution is controlled by the processor 801. When the electronic device 800 acts as a sensing initiator, the processor 801 is configured to execute the application code stored in the memory 803 to realize the communication method performed by the sensing initiator in the disclosure. When the electronic device 800 acts as a sensing responder, the processor 801 is configured to execute the application code stored in the memory 803 to realize the communication method performed by the sensing responder in the disclosure.

The bus 802 may include a pathway to transfer information among the above components. The bus 802 may be a Peripheral Component Interconnect (PCI) bus or an Extended Industry Standard Architecture (EISA) bus. The bus 802 may be categorized as an address bus, a data bus, a control bus, and the like. For ease of representation, the bus 802 is represented by only one thick line in FIG. 8, but it does not indicate that there is only one bus or one type of bus.

The memory 803 may be a Read Only Memory (ROM) or other types of static storage devices for storing static information and instructions, a Random Access Memory (RAM) or other types of dynamic storage devices for storing information and instructions, an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that may be configured to carry or store expected program codes in the form of instructions or data structures and may be accessed by a computer, which is not limited herein.

The embodiment of the disclosure provides a computer-readable storage medium having computer programs stored thereon. When the computer programs are executed by a computer, the computer is caused to execute the corresponding contents of the foregoing method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they may be performed in any other order. Moreover, at least some of the steps in the flowchart of the accompanying drawings may include multiple sub-steps or multiple stages. These sub-steps or stages are not necessarily executed at the same time, but may be executed at different times, and the order of execution is not necessarily sequential, but may be executed in turn or alternately with other steps or at least a portion of sub-steps or stages of other steps.

It is noted that the computer-readable storage medium described above in the disclosure may be a computer-readable signal medium, a computer-readable storage medium or any combination thereof. The computer-readable storage medium may include, but is not limited to, an electrical, magnetic, optical, electromagnetic, infrared, or semiconducting system, apparatus or device, or any combination thereof. More specific examples of the computer-readable storage medium may include, but are not limited to, electrical connections having one or more wires, portable computer disks, hard disks, RAMs, ROMs, Erasable Programmable Read Only Memories (EPROMs or flash memories), optical fibers, portable CD-ROMs, optical storage devices, magnetic storage devices, or any suitable combination thereof. In the disclosure, the computer-readable storage medium may be any tangible medium containing or storing programs that may be used by or in combination with an instruction execution system, apparatus or device. In the disclosure, the computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable storage medium other than the computer-readable storage medium. The computer-readable signal medium may send, propagate, or transmit a program that may be used by or in combination with an instruction execution system, apparatus, or device. The program code stored on the computer-readable storage medium may be transmitted using any suitable medium, which includes, but is not limited to: wire, fiber optic cable, Radio Frequency (RF), or any suitable combination thereof.

The above computer-readable storage medium may be contained in the above sensing initiator or the sending responder, or exist independently rather than being assembled into the sensing initiator or the sensing responder.

The computer-readable storage medium carries one or more programs. When the one or more programs are executed by the sensing initiator or the sensing responder, the sensing initiator or the sensing responder is caused to implement the method shown in the above embodiments.

According to an aspect of the disclosure, a computer program product or a computer program is provided. The computer program product or the computer program includes computer instructions stored in a computer-readable storage medium. The processor of the computer device reads the computer instructions from the computer-readable storage medium, and the processor executes the computer instructions to cause the computer device to implement the communication method provided in the above optional implementations.

The computer program codes for performing the operations of the disclosure may be written in one or more programming languages or any combination thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a Local Area Network (LAN) or a Wide Area Network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in a reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the disclosure may be realized through software or hardware. The name of a module does not constitute a limitation of the module itself in a certain case. For example, a module A may also be described as "a module A for performing an operation B".

The above description only illustrates preferred embodiments of the disclosure and an explanation of technical principles utilized. It should be understood by those skilled in the art that the scope of disclosure involved in the disclosure is not limited to the technical solutions formed by a particular combination of the above technical features, but also covers other technical solutions formed by any combination of the above technical features or their equivalent features without departing from the above disclosed concept, for example, the technical solution formed by interchanging the above features with technical features with similar functions disclosed (but not limited to) in the disclosure.

## Claims

1. A communication method, performed by a sensing initiator, comprising:
determining a first message frame, wherein the first message frame is configured to change a sensing measurement parameter of an established sensing measurement; and
sending the first message frame.

2. The method of claim 1, wherein the first message frame is a measurement setup (MS) request frame or a sensing by proxy (SBP) request frame.

3. The method of claim 1, wherein the first message frame comprises a first identification (ID) information which is configured to indicate to change the sensing measurement parameter of the established sensing measurement.

4. The method of claim 1, wherein the first message frame comprises a measurement setup ID (MSID) of the established sensing measurement.

5. The method of claim 1, wherein the first message frame comprises at least one piece of second ID information, and each second ID information indicates, through a first value, to change one type of sensing measurement parameter.

6. The method of claim 1, wherein the first message frame comprises a sensing measurement parameter information element, and the sensing measurement parameter information element comprises a changed sensing measurement parameter.

7. The method of claim 1, wherein the first message frame further comprises at least one piece of third ID information, and each third ID information corresponds to one communication link and indicates, through a second value, to switch to the corresponding communication link to perform the established sensing measurement.

8. The method of claim 7, wherein the first message frame comprises a link bitmap information field, and the link bitmap information field comprises the at least one piece of third ID information.

9. The method of claim 1, wherein the first message frame further comprises a fourth ID information, and the fourth ID information is configured to indicate a change time for the sensing measurement parameter of the established sensing measurement.

10. The method of claim 2, further comprising:
receiving a second message frame, wherein the second message frame comprises a fifth ID information for indicating that a sensing responder confirms to change the sensing measurement

11. The method of claim 10, wherein the fifth ID information is a status code field, and the status code field indicates, through first indication information, that the sensing responder confirms to change the sensing measurement parameter of the established sensing measurement.

12. The method of claim 10, wherein in a case that the first message frame is the MS request frame, the second message frame is an MS response frame; and
wherein in a case that the first message frame is the SBP request frame, the second message frame is an SBP response frame.

13. The method of claim 12, wherein in a case that the second message frame is the MS response frame, the second message frame comprises an MSID of the established sensing measurement.

14. A communication method, performed by a sensing responder, comprising:
receiving a first message frame, wherein the first message frame is configured to change a sensing measurement parameter of an established sensing measurement; and
changing the sensing measurement parameter of the established sensing measurement according to the first message frame.

15. The method of claim 14, wherein the first message frame is a measurement setup (MS) request frame or a sensing by proxy (SBP) request frame.

16. The method of claim 14, wherein the first message frame comprises a first identification (ID) information for indicating to change the sensing measurement parameter of the established sensing measurement.

17. The method of claim 14, wherein the first message frame comprises a measurement setup ID (MSID) of the established sensing measurement.

18. The method of claim 14, wherein the first message frame comprises at least one piece of second ID information, and each second ID information indicates, through a first value, to change one type of sensing measurement parameter.

19. The method of claim 14, wherein the first message frame comprises a sensing measurement parameter information element, and the sensing measurement parameter information element comprises a changed sensing measurement parameter.

20. The method of claim 14, wherein the first message frame further comprises at least one piece of third ID information, each third ID information corresponds to one communication link and indicates, through a second value, to switch to the corresponding communication link to perform the established sensing measurement.

21. The method of claim 20, wherein the first message frame comprises a link bitmap information field, and the link bitmap information field comprises the at least one piece of third ID information.

22. The method of claim 14, wherein the first message frame further comprises a fourth ID information, and the fourth ID information is configured to indicate a change time for the sensing measurement parameter of the established sensing measurement.

23. The method of claim 14, further comprising:
sending a second message frame, wherein the second message frame comprises a fifth ID information for indicating that the sensing responder confirms to change the sensing measurement parameter of the established sensing measurement.

24. The method of claim 23, wherein the fifth ID information is a status code field, and the status code field indicates, through first indication information, that the sensing responder confirms to change the sensing measurement parameter of the established sensing measurement.

25. The method of claim 23, wherein in a case that the first message frame is the MS request frame, the second message frame is an MS response frame, and
wherein in a case that the first message frame is the SBP request frame, the second message frame is an SBP response frame.

26. The method of claim 25, wherein in a case that the second message frame is the MS response frame, the second message frame comprises an MSID of the established sensing measurement.

27. A communication apparatus, comprising:
a determining module, configured to determine a first message frame, wherein the first message frame is configured to change a sensing measurement parameter of an established sensing measurement; and
a first transceiver module, configured to send the first message frame.

28. A communication apparatus, comprising:
a second transceiver module, configured to receive a first message frame, wherein the first message frame is configured to change a sensing measurement parameter of an established sensing measurement; and
a processing module, configured to change the sensing measurement parameter of the established sensing measurement according to the first message frame.

29. A sensing initiator, comprising a memory, a processor and a computer program stored in the memory and executable by the processor, wherein the processor performs the method of any one of claims 1-13 when executing the computer program.

30. A sensing responder, comprising a memory, a processor and a computer program stored in the memory and executable by the processor, wherein the processor performs the method of any one of claims 14-26 when executing the computer program.

31. A computer-readable storage medium, wherein the computer-readable storage medium stores a computer program, and when the computer program is executed by a processor, the method of any one of claims 1-26 is implemented.
